# EUROPEAN PATENT SPECIFICATION

(11) **EP 3 598 890 B1**
(45) Date of publication and mention of the grant of the patent: **08.01.2025**
(21) Application number: 19186784.5
(22) Date of filing: 17.07.2019
(51) Int. Cl.: A01G 9/16, A01G 9/14

(54) **A SYSTEM FOR ATTACHING A GUTTER PROFILE AND A ROD OF A GREENHOUSE TO EACH OTHER**
SYSTEM ZUR BEFESTIGUNG EINES RINNENPROFILS UND EINER GEWÄCHSHAUSSTANGE ANEINANDER
SYSTÈME POUR ATTACHER ENTRE EUX UN PROFILÉ DE GOUTTIÈRE ET UNE TIGE DE SERRE

(30) Priority: 24.07.2018 NL 2021382
(43) Date of publication of application: 29.01.2020
(73) Proprietor: Boal Systemen B.V., 2691 HC 's-Gravenzande (NL)
(72) Inventor: VAN HOLSTEIJN, Gerardus Jacobus Maria, 2294 CM Wateringen (NL)
(74) Representative: De Vries & Metman

(56) References cited:
- KR-B1- 101 587 459
- NL-B1- 1 042 197
- NL-C2- 1 030 448

## Description

The present invention relates to a system for attaching a gutter profile and a rod for a greenhouse to each other.

In a known type of greenhouse two parallel gutter profiles are located on top of a row of uprights, whereas a ridge extends between two rows of uprights at a higher level than the gutter profiles. Rods are mounted between the ridge and each of the gutter profiles. Glass panes are fitted between the rods, the gutter profiles and the ridge, hence forming a roof of the greenhouse. NL 1028453 is related to a system for attaching a gutter profile and a rod for a greenhouse to each other. In the known system the rod is fitted by placing one end of the rod in a receiving space in a gutter strip. The strip has an S-shaped cross-section and includes a flange which acts as a stop for the rod. The receiving space for the rod is formed by a gap in this flange.

NL 1 042 197 is related to a greenhouse which comprises at least a gutter and a roof extending from the gutter, wherein the roof comprises a ridge and spaced-apart roof bars connected to an edge of the gutter near their one end and to the ridge near their other end, and wherein glass panels are interposed between bars, wherein the connection between the roof bar and the gutter is provided with an element which extends in both an opening in the roof bar in a direction perpendicular to the axis of the roof bar and in an opening in the gutter in a direction perpendicular to the axis of the gutter.

An object of the invention is to provide a relatively simple but robust system for attaching a gutter profile and a rod for a greenhouse to each other.

This object is accomplished with the system according to claim 1.

In the mounted condition the rod may rest against the gutter profile, whereas the locking element locks the rod in longitudinal direction of the gutter profile. In case of a roof comprising a plurality of rods the rod-to-rod distance can be maintained by applying through-holes in the wall of the gutter profile at equal distance between each other in a direction along the gutter profile. The locking elements can be attached to the rods at a site of installing the greenhouse or directly after manufacturing the rods in the factory. It is noted that after attaching the locking element to the rod the protruding portion projects from the rod.

Preferably, the fixation portion is receivable by the rod such that it fits clearance-free thereto in longitudinal direction of the gutter profile in the mounted condition such that in the mounted condition the locking element and the rod form a rigid assembly in that direction.

The fixation portion is slidably mountable to the rod in a direction which is transversely with respect to the longitudinal direction of the gutter profile in the mounted condition. This avoids easily loosening of the locking element and the rod in longitudinal direction of the gutter profile.

The fixation portion may be slidably mountable to the rod in its longitudinal direction. A space for slidably receiving the fixation portion in longitudinal direction of the rod can be obtained relatively easily since the rod is made of extruded aluminium.

In a practical embodiment the fixation portion has a U-shape including two legs which are slidable in cooperating grooves of the rod, which grooves extend in longitudinal direction of the rod.

The protruding portion and the fixation portion may be inclined with respect to each other.

The locking element may be made of aluminium, for example by means of punching an aluminium sheet. The resulting intermediate product may be bent to obtain an inclination between the protruding portion and the fixation portion.

The locking element may be made of a plate material. This allows manufacturing at relatively low cost, whereas a plate-shaped material provides a high level of rigidity in a direction along its plane.

The invention will hereafter be elucidated with reference to very schematic drawings showing an embodiment of the invention by way of example.
Fig. 1 is a perspective view of a part of a roof of a greenhouse comprising an embodiment of the system for attaching a gutter profile and a rod to each other according to the invention.
Fig. 2 is an enlarged view of a part of Fig. 1 indicated by II in Fig. 1.
Fig. 3 is a top view and two side views of a locking element of the system according to the invention.
Fig. 4 is a cross-sectional view of a rod including the locking element of Fig. 3.
Figs. 5 and 6 are exploded perspective views of the assembly as shown in Fig. 2.

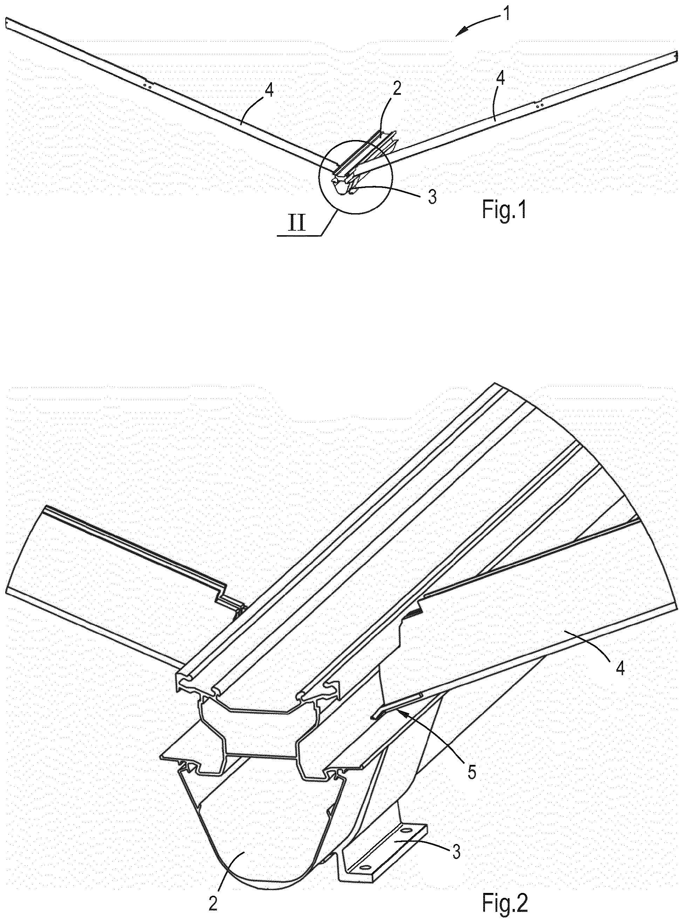

Fig. 1 shows a part of a roof 1 of a Venlo-type greenhouse. The greenhouse comprises a frame construction which is provided with at least two parallel gutter profiles 2, of which one is shown in Fig. 1, which gutter profiles 2 are supported by corresponding rows of uprights (not shown) through respective gutter supports 3. The frame construction is further provided with a ridge (not shown) that extends between and above the gutter profiles 2 and rods 4 that connect the ridge to each of the gutter profiles 2. The rods 4 extend perpendicularly to the ridge and the gutter profiles 2 at equal intervals along the ridge and the gutter profiles 2.

The roof 1 comprises an embodiment of a system for attaching the gutter profile 2 and each of the rods 4 to each other according to the invention. The system comprises the gutter profile 2, the rods 4 and rigid locking elements 5. The gutter profile 2 and the rods 4 are made of extruded aluminium and have hollow cores. The locking elements 5 are also made of aluminium, for example by means of cutting them out from a plate. Fig. 2 shows the system in a mounted condition, in which the rods 4 are supported by the gutter profile 2 and locked with respect to the gutter profile 2 in directions perpendicular to the gutter profile 2 due to complementary shapes of each of the rods 4 and the gutter profile 2. The locking elements 5 lock the respective rods 4 with respect to the gutter profile 2 in longitudinal direction thereof.

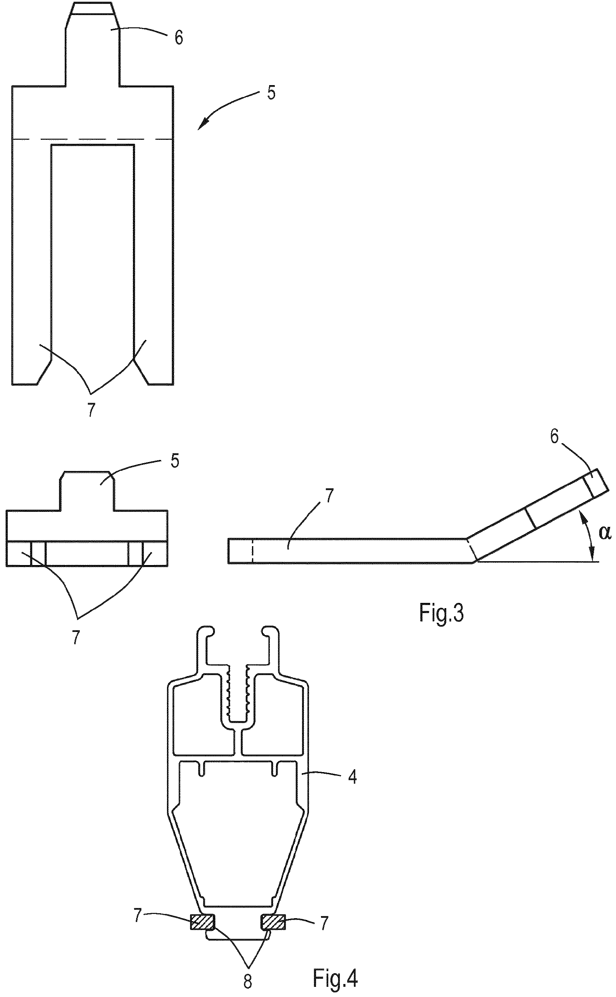

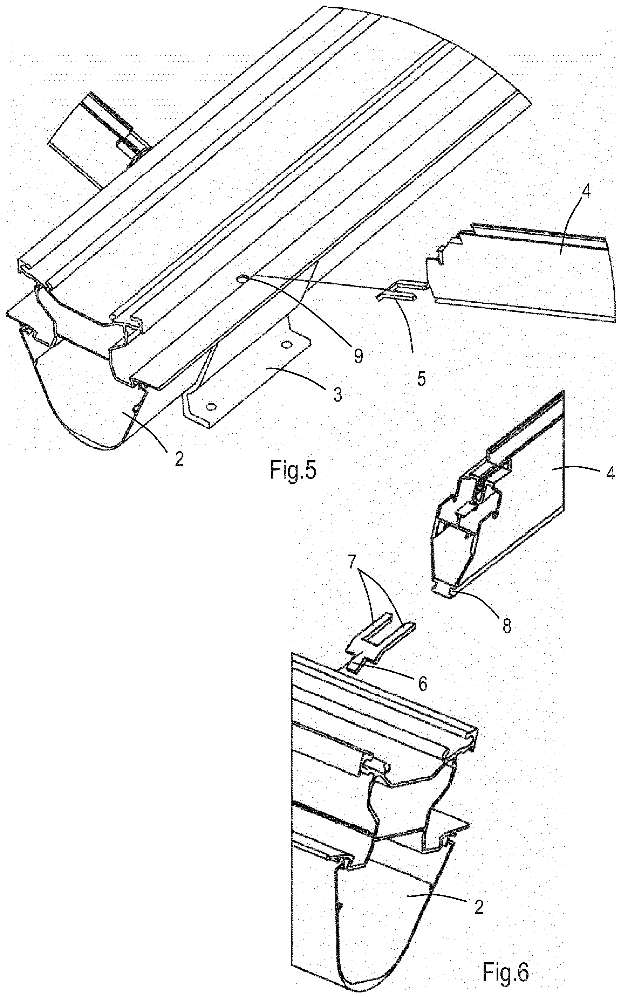

Fig. 3 shows the locking element 5 in different enlarged views. The locking element 5 comprises a protruding portion 6 and a U-shaped fixation portion which has two parallel legs 7. The protruding portion 6 and the legs 7 are directed in opposite directions. The legs 7 fit slidably in cooperating grooves 8 of the rod 4. In this embodiment the grooves 8 are located at opposite sides at a lower portion of the rod 4 and extend in longitudinal direction of the rod 4, see Figs. 4 and 6. The locking element 5 and the grooves 8 are made such that in assembled condition the legs 7 are positioned clearance-free in the grooves 8 in a plane in which the legs 7 extend. When the locking element 5 is mounted to the rod 4 the protruding portion 6 projects from the end of the rod 4.

The gutter profile 2 is provided with a plurality of through-holes 9 in side walls thereof. One of the through-holes 9 is shown in Fig. 5. The distance between each pair of neighbouring through-holes 9 on longitudinal direction of the gutter profile 2 is substantially equal. In the mounted condition as shown in Fig. 2 the protruding portion 6 of the locking element 5 which is fixed to the rod 4 extends through the through-hole 9. Hence, the rod 4 and the gutter profile 2 are interlocked in longitudinal direction of the gutter profile 2 through the locking element 5.

In order to facilitate mounting the rod 4 including the fixed locking element 5 to the gutter profile 2 the protruding portion 6 and the legs 7 are inclined with respect to each other by an angle α, see Fig. 3. Upon assembly the rod 4 including the fixed locking element 5 to the gutter profile 2 the rod 4 can be hold horizontally by an operator and moved in horizontal direction towards the gutter profile 2 until the protruding portion 6 is inserted into the through-hole 9. Subsequently, the rod 4 can be tilted upwardly about the gutter profile 2 and fixed to the ridge.

The invention is not limited to the embodiment shown in the drawings and described hereinbefore, which may be varied in different manners within the scope of the claims and their technical equivalents.

## Claims

1. A system for attaching a gutter profile (2) and a rod (4) for a greenhouse to each other, comprising a gutter profile (2) made of extruded aluminium and provided with a through-hole (9) in a wall thereof, a rod (4) made of extruded aluminium which is mountable to the gutter profile (2) such that in a mounted condition the rod (4) is supported by the gutter profile (2) and extends transversely with respect to the gutter profile (2), a rigid locking element (5) for interlocking the rod (4) and the gutter profile (2) in longitudinal direction of the gutter profile (2), wherein the locking element (5) comprises a protruding portion (6) which fits in said through-hole (9) and a fixation portion (7) which is attachable to an end portion of the rod (4), and wherein in the mounted condition the protruding portion (6) extends through said through-hole (9), **characterized in that** the fixation portion (7) is slidably mountable to the rod (4) in a direction which is transversely with respect to the longitudinal direction of the gutter profile (2) in the mounted condition.

2. A system according to claim 1, wherein the fixation portion (7) is receivable by the rod (4) such that it fits clearance-free thereto in longitudinal direction of the gutter profile (2) in the mounted condition.

3. A system according to claim 1 or 2, wherein the fixation portion (7) is slidably mountable to the rod (4) in its longitudinal direction.

4. A system according to claim 3, wherein the fixation portion has a U-shape including two legs (7) which are slidable in cooperating grooves (8) of the rod (4), which grooves (8) extend in longitudinal direction of the rod (4).

5. A system according to claim 3 or 4, wherein the protruding portion (6) and the fixation portion (7) are inclined with respect to each other.

6. A system according to one of the preceding claims, wherein the locking element (5) is made of aluminium.

7. A system according to one of the preceding claims, wherein the locking element (5) is made of a plate material.

## Patentansprüche

1. System zum Verbinden eines Rinnenprofils (2) und einer Stange (4) für ein Gewächshaus miteinander, mit:
einem aus extrudiertem Aluminium hergestellten und mit einem Durchgangsloch (9) in einer Wand davon versehenen Rinnenprofil (2);
einer aus extrudiertem Aluminium hergestellten Stange (4), die am Rinnenprofil (2) derart montierbar ist, dass die Stange (4) in einem montierten Zustand durch das Rinnenprofil (2) getragen wird und sich in Bezug auf das Rinnenprofil (2) quer erstreckt;
einem starren Verriegelungselement (5) zum Verriegeln der Stange (4) und des Rinnenprofils (2) in der Längsrichtung des Rinnenprofils (2), wobei das Verriegelungselement (5) einen Vorsprungabschnitt (6), der in das Durchgangsloch (9) passt, und einen Befestigungsabschnitt (7) aufweist, der an einem Endabschnitt der Stange (4) befestigbar ist, und wobei sich der Vorsprungabschnitt (6) im montierten Zustand durch das Durchgangsloch (9) erstreckt,
**dadurch gekennzeichnet, dass**
der Befestigungsabschnitt (7) im montierten Zustand in einer sich in Bezug auf die Längsrichtung des Rinnenprofils (2) quer erstreckenden Richtung verschiebbar an der Stange (4) montierbar ist.

2. System nach Anspruch 1, wobei der Befestigungsabschnitt (7) durch die Stange (4) derart aufgenommen werden kann, dass er im montierten Zustand in der Längsrichtung des Rinnenprofils (2) spielfrei daran anliegt.

3. System nach Anspruch 1 oder 2, wobei der Befestigungsabschnitt (7) an der Stange (4) in ihrer Längsrichtung verschiebbar montierbar ist.

4. System nach Anspruch 3, wobei der Befestigungsabschnitt eine U-Form mit zwei Schenkeln (7) aufweist, die in damit zusammenwirkenden Nuten (8) der Stange (4) verschiebbar sind, wobei sich die Nuten (8) in der Längsrichtung der Stange (4) erstrecken.

5. System nach Anspruch 3 oder 4, wobei der Vorsprungabschnitt (6) und der Befestigungsabschnitt (7) relativ zueinander geneigt sind.

6. System nach einem der vorangehenden Ansprüche, wobei das Verriegelungselement (5) aus Aluminium hergestellt ist.

7. System nach einem der vorangehenden Ansprüche, wobei das Verriegelungselement (5) aus einem Plattenmaterial hergestellt ist.

## Revendications

1. Système pour attacher l'un à l'autre un profilé de gouttière (2) et une tige (4) pour une serre, comprenant un profilé de gouttière (2) constitué d'aluminium extrudé et pourvu d'un trou traversant (9) dans une paroi de celui-ci, une tige (4) constituée d'aluminium extrudé qui peut être montée sur le profilé de gouttière (2) de telle sorte que, dans un état monté, la tige (4) est supportée par le profilé de gouttière (2) et s'étend transversalement par rapport au profilé de gouttière (2), un élément de verrouillage rigide (5) pour verrouiller mutuellement la tige (4) et le profilé de gouttière (2) dans une direction longitudinale du profilé de gouttière (2), dans lequel l'élément de verrouillage (5) comprend une partie en saillie (6) qui s'ajuste dans ledit trou traversant (9) et une partie de fixation (7) qui peut être attachée à une extrémité partie de la tige (4), et dans lequel, dans l'état monté, la partie en saillie (6) s'étend à travers ledit trou traversant (9), **caractérisé en ce que** la partie de fixation (7) peut être montée de manière coulissante sur la tige (4) dans une direction qui est transversale par rapport à la direction longitudinale du profilé de gouttière (2) dans l'état monté.

2. Système selon la revendication 1, dans lequel la partie de fixation (7) peut être reçue par la tige (4) de telle sorte qu'elle s'ajuste sans jeu sur celle-ci dans une direction longitudinale du profilé de gouttière (2) dans l'état monté.

3. Système selon la revendication 1 ou 2, dans lequel la partie de fixation (7) peut être montée de manière coulissante sur la tige (4) dans sa direction longitudinale.

4. Système selon la revendication 3, dans lequel la partie de fixation a une forme de U comportant deux pattes (7) qui peuvent coulisser dans des rainures coopérantes (8) de la tige (4), lesquelles rainures (8) s'étendent dans la direction longitudinale de la tige (4).

5. Système selon la revendication 3 ou 4, dans lequel la partie en saillie (6) et la partie de fixation (7) sont inclinées l'une par rapport à l'autre.

6. Système selon l'une des revendications précédentes, dans lequel l'élément de verrouillage (5) est constitué d'aluminium.

7. Système selon l'une des revendications précédentes, dans lequel l'élément de verrouillage (5) est constitué d'un matériau en plaque.
